(19)

**Europäisches Patentamt**
**European Patent Office**
**Office européen des brevets**

(11) **EP 4 753 170 A1**

(12) **EUROPEAN PATENT APPLICATION**

(43) Date of publication:
**03.06.2026 Bulletin 2026/23**

(21) Application number: **25382665.5**

(22) Date of filing: **28.06.2025**

(51) International Patent Classification (IPC):
***H04B 10/079*** (2013.01)

(52) Cooperative Patent Classification (CPC):
**H04B 10/0793; H04B 10/0795; H04B 10/272**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(71) Applicant: **CENTRE TECNOLOGIC DE
TELECOMUNICACIONS
DE CATALUNYA (CTTC)
08860 Castelldefels (ES)**

(72) Inventors:
• **FABREGA, Josep María
08860 Castelldefels (ES)**

• **NADAL, Laia
08860 Castelldefels (ES)**
• **SVALUTO MOREOLO, Michela
08860 Castelldefels (IT)**
• **VÍLCHEZ, Francisco Javier
08860 Castelldefels (ES)**
• **MUÑOZ, Raul
08860 Castelldefels (ES)**

(74) Representative: **Mohammadian, Dario
KUKATI
P.O.Box 21021
08080 Barcelona (ES)**

Remarks:
Amended claims in accordance with Rule 137(2)
EPC.

(54) **APPARATUS AND CORRESPONDING METHOD FOR UNIVERSAL NON-INTRUSIVE
DISTRIBUTED OPTICAL FIBER SENSING**

(57)     Different aspects of the invention provide a universal monitoring apparatus, and corresponding method, that enables sensing or monitoring of any environmental parameter, no matter what type of backscattering the optical field is subjected to, all signal parameters necessary for estimating all fiber parameters are made available. The invention thus provides a solution that overcomes the complexity, and cost limitations of previous approaches, enabling efficient and non-disruptive environmental monitoring in fiber optic access networks. The monitoring apparatus is completely non-intrusive in the sense that it does not require any modification of the existing optical fiber network, or optical fibers, it is monitoring, as it is simply appended to an existing system and taps into it. The structure of the monitoring apparatus is simple and it allows processing the optical signal speedily, allowing for real-time monitoring of parameters.

**FIG. 1**

downstream →
← upstream

100

EP 4 753 170 A1

EP 4 753 170 A1

## Description

### TECHNICAL FIELD

The present invention relates generally to the field of communication technologies, and in particular, to a novel apparatus, and corresponding method, for non-intrusive distributed optical fiber sensing.

### BACKGROUND ART

Optical fibers for data communications have been deployed extensively in the last 30 years. Consequently, today, there is a generalized fiber plant that is expected to last for many years in many countries. In addition to being an excellent means of data transmission, optical fibers can also be used to monitor or sense the environment surrounding a cable using the glass medium as a transducer. They can provide stress or temperature monitoring that could be decisive to prevent infrastructure failures where the fiber is deployed. This includes bridges, buildings, streets, railways and roads, among others.

Fiber optic monitoring, or sensing, is based on the principle of light scattering. The lack of homogeneity of the fiber material molecules causes irregular spatial variations of the refraction index causing part of the optical field, or light, to scatter in almost all directions. In turn, part of this scattered light enters into the acceptance angle of the fiber and is propagated backwards, known as backscattering. The backscattered signal comprises a small change in one or more of its parameters, such as its polarization state, or intensity, or frequency, that depends on the stress and/or temperature the fiber is subjected to. By closely monitoring the changes of one or more of the signal parameters, one can extract information about the environment like vibrations and/or stress or pressure or temperature variations.

Existing systems perform this type of monitoring or sensing via two main architectures which are based on exploiting non-linear effects in the fiber, which can only be processed by employing specifically engineered components. Therefore, they come at high cost (in the order of hundreds of thousands of euros). The first type comprises running a fiber optic sensing line parallel to the fiber optic data communications line which is unrealistic because it is not possible to implement a scalable and sustainable deployment. The second type is based on modulating the sensing signal directly into the data communications line, without running an external parallel sensing line. This is possible by implementing time division multiplexing of the sensing and data signals, or by implementing a switching scheme, where the data communications functionality is paused while sensing is performed, before switching back to data communications. This second case results in periodic interruptions in the data communications.

The problem with these existing solutions is that they are very complex to implement considering the characteristics of large fiber optic communication networks. They are also highly intrusive, since they require modifying or adapting existing fiber optic communication networks to adapt them to the sensing objectives and requirements. These modifications are complex and prone to errors. In combination, the resulting sensing solutions are extremely expensive and complicated.

Fundamentally, fiber optic sensing technologies are based on three scattering processes: Rayleigh, Raman, and Brillouin scattering. Despite their differing physical natures, all three mechanisms utilize back-propagating light generated by an optical signal injected into the fiber to probe local fiber properties and infer environmental changes. For Raman and Brillouin scattering, environmental conditions affect the backscattered probe signals directly. For instance, the local temperature of the fiber impacts the intensity of the anti-Stokes Raman scattered signal, a principle exploited in distributed temperature sensors. Similarly, both temperature and strain influence the frequency and intensity of Brillouin-scattered signals, enabling distributed temperature and strain sensing.

In contrast, Rayleigh-based distributed sensing is less direct, as Rayleigh scattering power is largely independent of external environmental fields. Typical Rayleigh techniques rely on optical interrogators that inject specially designed signals into the fiber and analyze the response. The most basic configuration is the optical time domain reflectometer, OTDR, which operates like a light detecting and ranging, LIDAR, sensor system by injecting a pulse and reading the fiber's response to detect faults, high-reflection points, breaks, and leakages.

However, Raman and Brillouin processes introduce signal distortions and impairments to communication signals. To minimize these effects, probing signals for Raman or Brillouin sensing are often injected at wavelengths far from those used for communications - a method known as out-of-band monitoring and recognized by ITU-T for various network types, including passive optical networks PON. This approach, however, requires costly optical filters not only at the central office but also at intermediate splitters and subscriber premises to prevent interference. The cost of these filters can be high, exceeding the typical cost targets for optical network units, ONU. Alternatively, pausing data transmission during sensing would cause service disruption, which is generally unacceptable, as continuous monitoring is desired during network operation.

Some Fiber-to-the-Home, FTTH, specific schemes detect Raman scattering from an optical line terminal, OLT. While suitable for FTTH, this requires an optical spectrum analyzer or specialty filters combined with high-sensitivity

2

detectors to recover weak Raman signals. This approach is not universally applicable, especially as wavelength occupancy in access networks can span a wide range, increasing the risk of unwanted stimulated Raman scattering and measurement distortion.

Another approach is to reuse data communications equipment for sensing. In long-haul or submarine networks, coherent reception enables monitoring of the state of polarization, SOP, allowing extraction of environmental information such as vibrations, stress, or pressure variations. This method provides aggregate environmental responses for concatenated links but is not suitable for FTTH, which typically lacks coherent transceivers due to cost constraints. Other reported sensing solutions also rely on specifically engineered waveforms or require the use of separate fibers. For instance, coherent reception with in-phase and quadrature, IQ, modulation for interrogation requires narrow linewidth lasers and specific modulation formats, resulting in high costs unsuitable for access networks. Although coherent systems for optical access were proposed as early as 2006, their high cost has prevented widespread adoption in FTTH, a segment where operators prioritize maximizing equipment lifespan. For example, the ITU-T GPON standard, introduced in 2003-2004, only saw widespread deployment in the following decade as xDSL technologies became insufficient for subscriber data rate demands.

Other FTTH-specific alternatives include embedding monitoring schemes within ONUs and OLTs by replanning TDM slots to include monitoring pulses within xPON frames. It uses Rayleigh-based sensing by encoding a separate signal in the same optical channel as the data, allowing vibration detection, but this approach requires complex photonic components and waveform generation. While this allows simultaneous data transmission and environmental monitoring, it requires modifying time slot allocations and adding optoelectronic hardware to both OLTs and ONUs, increasing costs at subscriber premises.

Another technique involves propagating a plurality of pulsed optical signals with time-variable and constant instantaneous frequency profiles, using specifically engineered signals for sensing that differ from those used for data communications. Another FTTH technique builds a distributed Michelson interferometer using the fiber as an optical cavity, deploying Faraday rotating mirrors at the ends of two unused fibers and comparing their responses. However, the requirement for spare fibers of similar length makes this approach impractical in cost-sensitive FTTH deployments. In another implementation, a specific sensing signal is run at a different wavelength than the communications signal, and both are multiplexed using suitable devices or filters. A optical time-domain reflectometer, OTDR, is used for sensing.

As mentioned, the existing systems comprise either running a fiber optic sensing line parallel to the fiber optic data communications line or intervening in the data communication signal to transmit a sensing signal, such as via commutation or TDM. These systems are extremely complex to implement, especially in a scalable manner, they are highly intrusive, and in combination, result in extremely expensive solutions.

Therefore, a need exists to effectively solve the abovementioned problems.

## SUMMARY OF THE INVENTION

It is therefore an object of the present invention to provide solutions to the above-mentioned problems. The invention is defined in the claims.

All prior art approaches identified in the literature lack three key features that the present invention addresses:

- First, a non-intrusive monitoring scheme that does not interfere with the data communication signal and can be flexibly placed anywhere in the network, preferably at a central office fiber tap. This is achieved by providing a monitoring apparatus that does not rely on or require modification of the optical fiber communications transceivers, but simply taps into the fiber to access and extract the optical field within.

- Second, the ability to use the same data communication signal for sensing, without modifying it in any manner, nor via multiplexing of a sensing signal nor by interruption of the data signal.

- Third, universal sensing or monitoring of any environmental parameter is enabled, as, no matter what type of backscattering the optical field is subjected to, all signal parameters necessary for estimating all fiber parameters are made available.

The invention thus provides a non-intrusive and universal solution that overcomes the complexity, intrusiveness, and cost limitations of previous approaches, enabling efficient and non-disruptive environmental monitoring in fiber optic access networks.

It is an object of the invention to provide a non-intrusive and universal apparatus and method for distributed optical fiber sensing. The apparatus is completely non-intrusive in the sense that it does not require any modification of the existing optical fiber network, or optical fibers, it is monitoring. It is simply appended to the existing system and taps into it, so that it can obtain a copy of the data communication signal which is being transmitted and received together with a copy of the backscattered data communication signal received in return. This is performed without requiring any modification of either the data communication signal itself, or any component of the data communications network (no multiplexing or switching). It is universal in that it enables the sensing of any environmental parameter subjected to any type of backscattering.

The monitoring apparatus is an optoelectronic front-end placed at the central office, in a suitable tap from the optical line terminal OLT output. The downstream data signal is compared to the upstream data signal and the backscattered signal coming from the network. By comparing these signals, variations in the signal parameters are measured which enables to determine a degree of change in fiber parameters, such as temperature and/or stress, or any other parameter of interest which affects the properties of the upstream signals. The change in fiber parameters allows inferring changes to environmental parameters. Hence, this technique enables simultaneous data transmission and environmental sensing, so that both can be performed at the same time and in the same media or fiber.

Therefore, it is an object of the invention to provide an apparatus for monitoring an optical fiber network.

It is another object of the present invention to provide a method of monitoring an optical fiber network by a monitoring apparatus.

It is another object of the present invention to provide a distributed optical fiber monitoring system comprising an optical fiber network and at least one monitoring apparatus of the invention.

It is another object of the present invention to provide a computer program comprising instructions, once executed on a processor, for performing the steps of a method in a network component or in a network comprising multiple network components.

It is another object of the present invention to provide a computer readable-medium comprising instructions, once executed on a processor, for performing the steps of a method in a network component or in a network comprising multiple network components.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means.

For a hardware implementation, the various means may comprise processing units implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (for example, procedures, functions, and so on) that perform the functions described herein. The software codes may be stored in a memory unit and executed by a processor. The memory unit may be implemented within the processor or external to the processor.

Various aspects, configurations and embodiments of the invention are described. In particular, the invention provides methods, apparatus, systems, processors, program codes, computer readable media, and other apparatuses and elements that implement various aspects, configurations and features of the invention, as described below.

## BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.

**FIG. 1** depicts a distributed optical fiber monitoring system comprising the monitoring apparatus of the invention.
**FIG. 2** depicts the internal components of the monitoring apparatus according to one embodiment of the invention.
**FIG. 3** depicts the internal components of the monitoring apparatus according to another embodiment of the invention.

## DETAILED DESCRIPTION OF THE INVENTION

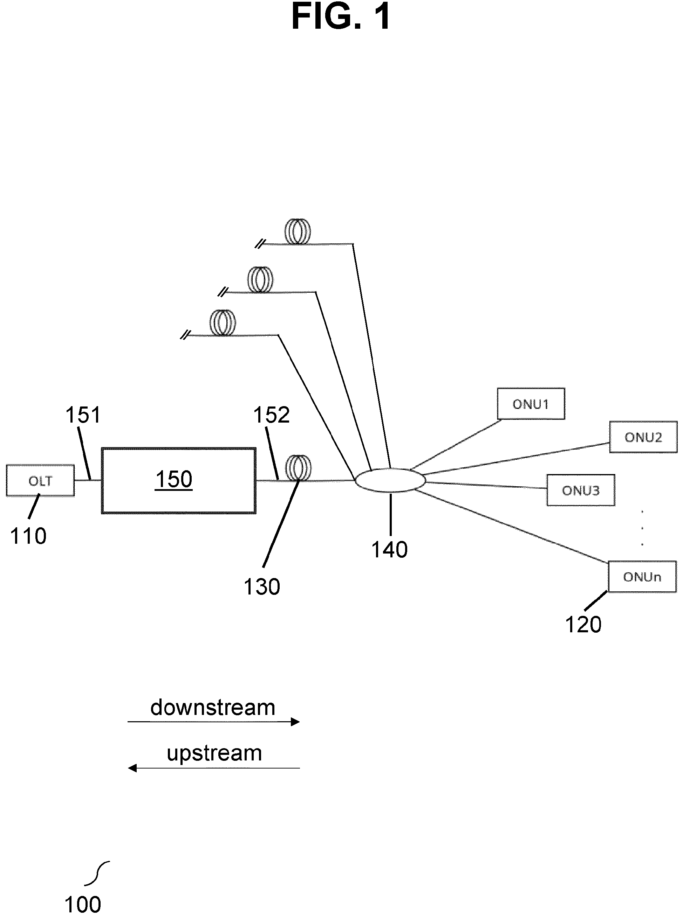

**FIG. 1** depicts a distributed optical fiber monitoring system 100 comprising a conventional optical fiber network (110, 120, 130, 140) incorporating the monitoring apparatus 150 of the invention. The conventional optical fiber network comprises an optical fiber bundle 130, comprising multiple individual optical fibers, connecting an optical line terminal OLT 110 to a plurality of n optical network units ONU 120 (ONU1, ONU2, ONU3, ..., ONUn) via a splitter 140. One end of the monitoring apparatus 150 is connected to an output tap of the OLT and its other end is connected to a fiber of the fiber bundle 130. A splitter 140 collects a number of fiber bundles and serves them onto the plurality of ONUs. Therefore, the monitoring apparatus is configured to allow the optical signal to travel through it, from the OLT to the splitter and onto the ONUs.

The downstream direction is defined from the OLT to the splitter and is the direction of the transmitted optical signal carrying downstream data communications. Conversely, the upstream direction is defined from the splitter to the OLT and is the direction of the backscattered optical signal, as well as upstream data communications. In one aspect, the optical fiber network is a fiber-to-the-home, FTTH, network, however, the skilled artisan understands that the invention is applicable to other types of optical fiber networks.

By tapping into the optical fiber, the monitoring apparatus has access to the optical field present in the optical fiber. By extracting, diverting and otherwise operating on the optical field, it can process the different components of the optical field. From the sake of clarity, from now on reference will be made to the optical field's components, which are the various upstream and downstream signals present therein. The first optical signal 151 at the upstream tap of the monitoring apparatus is denoted as $E_1(t)$. The second optical signal 152 at the downstream tap of the monitoring apparatus is denoted as $E_2(t)$, which comprises a downstream transmitted data signal 153 and an upstream signal 154. The upstream signal 154 comprises an upstream transmitted data signal $E_U(t)$ and an upstream backscattered signal $E_R(t)$. The backscattered signal $E_R(t)$ has been subjected to one, or a combination, of Rayleigh scattering, Raman scattering or Brillouin scattering. The downstream transmitted data signal 153 is not relevant for the invention as its contents are the same as the first optical signal 151, however at a different power. For the rest of the description reference will not be made to it, reference is made continuously to the second signal $E_2(t)$152, which comprises the backscattered component of the downstream transmitted data signal 153.

Based on the tapped downstream and upstream signals, the monitoring apparatus is configured to generate at least one signal which comprises at least three components, a first component representing the downstream transmitted original data signal $E_1(t)$, a second component representing the upstream transmitted attenuated data signal $E_U(t)$, and a third component representing the upstream backscattered signal $E_R(t)$. The monitoring apparatus is further configured to process the at least one generated signal to estimate, or reconstruct, the three signal components $E_1(t)$, $E_U(t)$, and $E_R(t)$ present in the optical field of the fiber.

Using these reconstructed signals, the monitoring apparatus is configured first to determine whether there has been a change in one or more of the signal parameters of intensity, frequency and/or polarization state and then, based on the result of this determination, the monitoring apparatus is configured to determine whether there has been a change in one or more parameters of the fiber, such as stress or pressure or temperature, or of the environment surrounding the fiber, such as temperature. The precise algorithms for these two determination steps (change of signal parameters and change of fiber parameters) are outside of the scope of this invention. The skilled artisan will realize that many of the implementations described in the literature of the background section of this specification refer to algorithms for distributed optical fiber sensing which use as inputs the first signal 151 and the second signal 152 in order to perform sensing. In the present invention, these two signals are provided to the existing algorithms, advantageously comprising three components $E_1(t)$, $E_U(t)$, and $E_R(t)$, for the signal parameters and fiber parameters determination steps to be performed.

Hence, this invention is directed particularly at a novel and advantageous optoelectronic front-end which can be simply connected to an existing OLT tap in order to analyse the tapped optical field, regenerate its signal components, and provide the three above-mentioned signal components for completing the environmental monitoring discussed. The optoelectronic front-end comprises an advantageous configuration not previously developed.

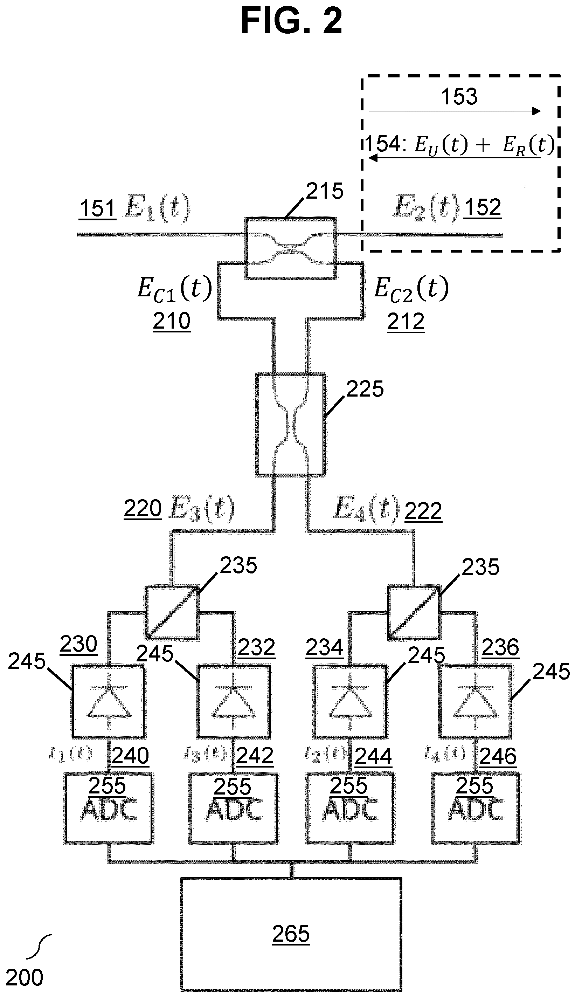

**FIG. 2** depicts the components 200 of the monitoring apparatus 150 of the invention according to a first embodiment. In a first stage, the monitoring apparatus is configured to extract a first optical signal 151 at its upstream tap and a second optical signal 152 at its downstream tap. In an intermediate stage, the monitoring apparatus is configured to further process the extracted first and second optical signals to generate optical signals which comprise the product between the same polarization components of the first optical signal and the second optical signal. In a final stage, the monitoring apparatus is configured to, using these optical signals, reconstruct a digital downstream signal, a digital upstream data signal and a digital upstream backscattered signal, and determine fiber related environmental parameters based on the reconstructed digital signals. To this end it first determines a change in at least one parameter of the data communication signal and, therefrom, determines a change in at least one parameter of the optical fiber, or the medium in contact with the optical fiber, as a function of the at least one parameter change of the data communication signal. Environmental sensing or monitoring is then performed using the optical fiber parameter change. To this end, the final stage of the monitoring apparatus comprises at least one memory configured for storing programmable instructions and input/output data, and at least one digital processor configured for executing the programmable instructions.

The at least one parameter of the data communication signal determined by the monitoring apparatus is one or more of its intensity, frequency, or polarization state. The at least one parameter of the optical fiber determined by the monitoring apparatus is at least one of the level of stress or pressure of the optical fiber and/or at least one parameter of the medium in contact with the optical fiber such as the temperature of the medium. So, in one example implementation, the monitoring apparatus determines first the change in polarization state of the signal in order to determine consequently a degree of change in pressure the fiber has been subjected to. In another example implementation, the monitoring apparatus determines first the change in intensity and frequency of the signal in order to determine consequently a degree of change in temperature of the environment surrounding the fiber. In yet another example implementation, the monitoring apparatus determines first the change in frequency of the signal in order to determine consequently a degree of change in stress of the fiber itself and of the temperature of the medium surrounding the fiber.

In more detail, returning to the first stage of the monitoring apparatus, a first optical coupler 215 taps into the output of the OLT 110, extracting the first signal 151 and allowing the rest to bypass through to the rest of the network. The transfer matrix of the signal coupler is:

$$T_c = \begin{bmatrix} \sqrt{1-k} & j\sqrt{k} \\ j\sqrt{k} & \sqrt{1-k} \end{bmatrix}$$ [expression 1]

where j is the imaginary unit (the square root of -1) and k is the split ratio between 0 and 1 which determines the proportion of the signals which are extracted and the proportion which is further transmitted on downstream. The split ratio allows for configuring variable portions of the first signal to be injected as the downstream data signal 153 into the fiber cable. This allows for increasing or decreasing the amount of backscattered signal $E_R(t)$ and advantageously foster one or another effect in the processing chain of the monitoring apparatus. For example, the contribution of Rayleigh backscattering is emphasized with a split ratio in a range of k = 0.25 to k = 0.5. On the other hand, increasing or decreasing the split ratio, for example to values close to 0.99 or 0.001 entail the optical fibers are working in the non-linear regime and thus foster also non-linearities like the Brillouin effect.

For the sake of convenience, each optical field is expressed as its horizontal, H, and vertical, V, polarization components following the Jones formalism:

$$E_p(t) = \begin{bmatrix} e_{pH}(t) \\ e_{pV}(t) \end{bmatrix}$$ [expression 2]

where $e_{pH}(t)$ is the horizontal component and $e_{pV}(t)$ is the vertical component of $E_p(t)$ for p ranging from 1 to 12.

Following from the transfer matrix of expression 1, the signals output from the first optical coupler are $E_{C1}(t)$ 210 and $E_{C2}(t)$ 212:

$$E_{C1}(t) = \sqrt{1-k}\,E_2(t)$$
$$E_{C2}(t) = \sqrt{1-k}\,E_1(t)$$ [expression 3].

Thus, the function of this optical coupler in the invention is to appropriately inject optical power at the fiber cables while being able to retrieve a copy of the upstream and downstream signals.

In a second stage of the monitoring apparatus, each one of the tapped signals $E_{C1}(t)$ and $E_{C2}(t)$ is fed to a second optical coupler 225 configured with a ratio of 50:50 (that is, k = 0.5) in order to provide a balanced combination. The resulting coupled signals, $E_3(t)$ 220 and $E_4(t)$ 222, comprise each the combination of $E_1(t)$ and $E_2(t)$ and can be expressed as:

$$E_3(t) = \sqrt{\frac{1-k}{2}}\,[E_2(t) + jE_1(t)]$$
$$E_4(t) = \sqrt{\frac{1-k}{2}}\,[jE_2(t) + E_1(t)]$$ [expression 4].

This second optical coupler is included to use the transfer function of optical couplers for advantageously add/couple $E_1(t)$ and $E_2(t)$. This way, after a subsequent photodetection stage, the product of $E_1(t)$ and $E_2(t)$ is obtained. Again, by varying the split ratio k the amount of signal contributed by $E_1(t)$ and $E_2(t)$ can be varied.

The optical couplers are configured such that they are polarization maintaining by placing appropriate polarization rotators or retarders at their inputs and/or outputs. These components are passive and simple, ensuring that the polarization is maintained in a stable manner with a marginal cost increase with respect to the overall solution.

In a third stage of the monitoring apparatus, each coupled signal (220, 222) from the previous stage is fed into respective optical polarization beam splitters, PBS, 235 which decompose the polarization components of these signals, resulting in two output signals for each input signal, the output signals containing either the H or the V component associated with the optical fields. In the case of tapped signal $E_3(t)$ 220, this results in a first split signal 230 containing the H component and a second split signal 232 containing the V component. In the case of tapped signal $E_4(t)$ 222, this results in a third split signal 234 containing the H component and a fourth split signal 236 containing the V component. So, simplifying the Jones notation to only depict the relevant surviving component at each output,

$$230 = e_{3H}(t) = \sqrt{\frac{1-k}{2}}\,[e_{2H}(t) + je_{1H}(t)]$$

$$232 = e_{3V}(t) = \sqrt{\frac{1-k}{2}}\,[e_{2V}(t) + je_{1V}(t)]$$

$$234 = e_{4H}(t) = \sqrt{\frac{1-k}{2}}\,[e_{1H}(t) + je_{2H}(t)]$$

$$236 = e_{4V}(t) = \sqrt{\frac{1-k}{2}}\,[e_{1V}(t) + je_{2V}(t)]$$

[expression 5].

Therefore, the output of the third stage are four optical coupled signals comprising H and V components of the coupling between $E_1(t)$ and $E_2(t)$. By splitting signals into the H and V components, the components that define the state of polarization of $E_1(t)$ and $E_2(t)$ are obtained. It is known that inside an optical fiber cable any environmental vibration or stress will vary the state of polarization defined by its H and V components. Therefore, including a beam splitter or similar device to individually obtain H an V components allows an improved estimation of environmental parameters.

In a fourth stage of the monitoring apparatus, each one of the four coupled optical signals is fed each into a respective optical photodetector 245 configured to generate an analog electrical signal whose current is directly proportional to the intensity of the optical field of the coupled optical signal. For simplicity, it is assumed that all photodetectors have the same responsivity R as they are balanced pairs. The resulting currents of the analog electrical signals at the output of this stage are:

$$I_1(t) = R|230|^2$$
$$I_2(t) = R|232|^2$$
$$I_3(t) = R|234|^2$$
$$I_4(t) = R|236|^2$$

[expression 6]

and can be expressed in terms of their Jones vector components of $E_1(t)$ and $E_2(t)$ as:

$$I_1(t) = R\sqrt{\frac{1-k}{2}}\,[|e_{2H}(t)|^2 + |e_{1H}(t)|^2 + 2|e_{2H}(t)||e_{1H}(t)|\sin\Delta\phi_H]$$

$$I_2(t) = R\sqrt{\frac{1-k}{2}}\,[|e_{2H}(t)|^2 + |e_{1H}(t)|^2 - 2|e_{2H}(t)||e_{1H}(t)|\sin\Delta\phi_H]$$

$$I_3(t) = R\sqrt{\frac{1-k}{2}}\,[|e_{2V}(t)|^2 + |e_{1V}(t)|^2 + 2|e_{2V}(t)||e_{1V}(t)|\sin\Delta\phi_V]$$

$$I_4(t) = R\sqrt{\frac{1-k}{2}}\,[|e_{2V}(t)|^2 + |e_{1V}(t)|^2 - 2|e_{2V}(t)||e_{1V}(t)|\sin\Delta\phi_V]$$

[expression 7].

Therefore, the output of the photodetection fourth stage results in a first analog electrical signal 240 with current $I_1$ (t) and a second analog electrical signal 244 with current $I_2(t)$ corresponding to the H components of $E_1(t)$ and $E_2(t)$, respectively, and a third analog electrical signal 242 with current $I_3(t)$ and a fourth analog electrical signal 246 with current $I_4$ (t) corresponding to the V components of $E_1(t)$ and $E_2(t)$, respectively.

In other words, the monitoring apparatus generates four analog current signals from the different mixing products of the signal $E_1(t)$ injected to the network and, received from the network, the upstream transmitted data signal $E_U(t)$ and the upstream backscattered signal $E_R(t)$. The last term of each current equation refers to the product between the same polarization components of $E_1(t)$ and $E_2(t)$, wherein $E_2(t)$ comprises the upstream data communication signal $E_U(t)$ and the backscattered signal of $E_1(t)$, $E_R(t)$. The significance of this processing lies in the content of the output signals. In particular, each analog current signal is a function of at least three different terms:

1. The first term represents the intensity of the first signal $E_1(t)$, that is, the downstream data communication signal;

2. The second term represents the intensity of the second signal $E_2(t)$, that is, the upstream data communication signal $E_U(t)$ and the backscattered signal $E_R(t)$; and

3. The third term represents the coherent detection, that is, the combination or product, of $E_1(t)$ and $E_2(t)$.

Each of these currents contains the information of a given polarization component, enabling the estimation not only of the different signals of interest present in the fiber ($E_1(t)$, $E_U(t)$, $E_R(t)$) but also their H an V components that define their state of polarization; allowing to use them for an improved estimation of environmental parameters.

Of relevance at this stage is to realise that the optoelectronic frontend performs coherent detection via the product of the two signals being analysed. Hence, no additional circuitry for coherent detection is necessary, as it is auto-coherent. Furthermore, since the H and V components are differentiated, a polarization diverse coherent detection is performed.

As mentioned, this information is necessary (in particular, the components $E_1(t)$, $E_U(t)$ and $E_R(t)$) for determining the various parameters that are being monitored. However, these components are actually not readily available from the four analog current signals output by the fourth stage. In order for these components to be able to be used in known parameter determination algorithms, the original signals 151 and 152 are estimated, or reconstructed, digitally, which allows processing by a digital processor to access the $E_1(t)$, $E_U(t)$ and $E_R(t)$ components.

Therefore, in a fifth stage of the monitoring apparatus, each analog current signal resulting from each photodetector of the previous stage is fed into respective analog to digital converters 255 to generate four digital output signals. In a final sixth stage of the monitoring apparatus, a digital processor 265 uses the four digital output signals to reconstruct first signal 151 and second signal 152. As mentioned, the precise signal parameter determination and fiber parameter determination algorithms, which operate on the estimated, or reconstructed first signal 151 and second signal 152, are not part of this invention. In the following the estimation, or reconstruction algorithms, for the first signal 151 and second signal 152 are explained.

Estimation of the original downstream data signal $E_1(t)$

The Jones components of $E_1(t)$ are equal $e_1(t) = e_{1H}(t) = e_{1V}(t)$ and can be described as

$$e_1(t) = \sqrt{\frac{P_1 d(t) + P_0}{2}} \exp j\left(\omega_d t + \phi_d(t)\right) \qquad \text{[expression 8]}$$

where $d(t)$ is the actual non-return-to-zero NRZ data signal, being $d(t) = 0$ when a zero is transmitted and $d(t) = 1$ when a one is transmitted; $P_1$ is the peak power at the output of the transmitter; $P_0 << P_1$ is the residual power present at the output of the OLT when $d(t) = 0$; $\omega_d$ is the optical frequency; and $\phi_d(t)$ accounts for a generic phase.

The extinction ratio of the OLT transmitter is defined as the ratio between $P_1$ and $P_0$, being more than one order of magnitude. In fact, values according to the ITU-T PON standards specify targets of $\geq 8.2$ dB and $\geq 10$ dB for such a downstream signal, depending on the PON class and bitrate. Therefore, since the $P_0$ component is negligible, the expression is simplified even more to the Jones components of $E_1(t)$ being:

$$e_1(t) \simeq d(t)\sqrt{\frac{P_1}{2}} \exp j\left(\omega_d t + \phi_d(t)\right) \qquad \text{[expression 9]}.$$

Also relevant is that $E_2(t) = E_R(t) + E_U(t)$ which is contributed by two main different sources: $E_R(t)$, the backscattering of the downstream signal, and $E_U(t)$ the attenuated upstream signal coming from the different ONUs. Being both signals significantly attenuated by the fiber distribution network, it can be assumed that $E_2(t) << E_1(t)$ and the same holds for their components of the corresponding Jones vector. So, $|e_1(t)|$ is estimated as:

$$|e_1(t)| \simeq \sqrt{\frac{I_1(t)+I_2(t)+I_3(t)+I_4(t)}{4R}} \sqrt{\frac{2}{1-k}}$$ [expression 10].

In other words, $E_1(t)$ is estimated from its Jones components that are computed by adding all the photocurrents $I_1$ $(t)$, $I_2(t)$, $I_3(t)$, $I_4(t)$ in a nonlinear form (square root). For small values of the current, this addition can be approximated as linear thereby avoiding the square root operation and minimizing complexity.

As can be seen, the first signal 151, that is, the downstream original data communication signal, is determined as a function of the four current signals which each comprises intensity of the first tapped signal, intensity of the second tapped signal, and the product of the first tapped signal and the second tapped signal.

Estimation of the upstream backscattered signal $E_R(t)$

$E_R(t)$ is at the same wavelength as $E_1(t)$ whereas $E_U(t)$ is not, being separated by several tens of THz. Therefore, coherent detection results in the part of $E_2(t)$ exclusively belonging to $E_R(t)$, as the bandwidth of the photodetectors is configured to not exceed a few GHz. On this basis, first a set of the intermediate signals $S_V(t)$ and $S_H(t)$ are computed:

$$S_H(t) = \frac{I_1(t)-I_2(t)}{|e_1(t)|} = |e_{RH}(t)|\sin\Delta\phi_H$$
$$S_V(t) = \frac{I_3(t)-I_4(t)}{|e_1(t)|} = |e_{RV}(t)|\sin\Delta\phi_V$$ [expression 11].

Each intermediate horizontal signal is a function of the difference between the two horizontal split signals and each intermediate vertical signal is a function of the difference between the two vertical split signals.

The phases $\Delta\phi_H$ and $\Delta\phi_V$ can be considered as random processes contributed by many different phenomena: the phase noise of laser sources, the frequency difference between $E_R(t)$ and $E_1(t)$, and phase induced by the scattering among others. All these many different contributions are independent and, thus, the central limit theorem holds, resulting in $\Delta\phi_H$ and $\Delta\phi_V$ being independent normal random variables with very high standard deviation, very much higher than $\pi$. Given this constraint and the fact that the sine function is periodic with period $2\pi$, $\Delta\phi_H$ and $\Delta\phi_V$ can be modelled as independent uniform random variables ranging from $-\pi$ to $\pi$. This approximation simplifies the effects of the sine part of the expression. With the integration of a phase locked loop or any other phase estimation algorithm, a more accurate estimation of these phases would be generated, resulting in enhanced accuracy of the estimation of $|e_{RH}(t)|$ and $|e_{RV}(t)|$.

The variation speed, or rate, of these random variables is quite high, much more than $|e_{RH}(t)|$ and $|e_{RV}(t)|$. In fact, the variation rate of $\Delta\phi_H$ and $\Delta\phi_V$ can be in the range of MHz or even GHz, while the variation rate of $|e_{RH}(t)|$ and $|e_{RV}(t)|$ is expected to be below 1 kHz. Due to this observation, the contribution of $\Delta\phi_H$ and $\Delta\phi_V$ is eliminated by simply squaring and averaging them over a long enough period $T_\phi$ where $|e_{RH}(t)|$ and $|e_{RV}(t)|$ are considered constant. In other words, the following operations are considered:

$$\frac{1}{T_\phi}\int_t^{t+T_\phi} S_H^2(\tau) = \frac{|e_{RH}(t)|^2}{T_\phi}\int_t^{t+T_\phi} \sin^2 \Delta\phi_H$$
$$\frac{1}{T_\phi}\int_t^{t+T_\phi} S_V^2(\tau) = \frac{|e_{RV}(t)|^2}{T_\phi}\int_t^{t+T_\phi} \sin^2 \Delta\phi_V$$ [expression 12].

Since $\int_t^{t+T_\phi} \sin^2 \Delta\phi_H = \int_t^{t+T_\phi} \sin^2 \Delta\phi_V = T_\phi/2$, $|e_{RH}(t)|$ and $|e_{RV}(t)|$ can be estimated from:

$$|e_{RH}(t)|^2 = \frac{2}{T_\phi}\int_t^{t+T_\phi} S_H^2(\tau)$$
$$|e_{RV}(t)|^2 = \frac{2}{T_\phi}\int_t^{t+T_\phi} S_V^2(\tau)$$ [expression 13].

Hence, $E_R(t)$ is estimated by averaging the power of $S_V(t)$ and $S_H(t)$ over a long enough period of time. This can be achieved either by a continuous integration or by using any method for estimating the mean value. This includes the arithmetic mean, the weighted mean, or the circular mean among others. So, the (horizontal and vertical) components of the upstream backscattered signal is estimated as a function of the average of the power of the difference between the two split signals.

### Estimation of the upstream attenuated data communication signal $E_U(t)$

When considering $E_2(t)$, the intensity of the backscattered signal $E_R(t)$ is much lower than the upstream data signal $E_U(t)$. Therefore, the Jones components of the upstream attenuated data communication signal $E_U(t)$ is estimated as

$$|e_{UH}(t)| \simeq \sqrt{\frac{I_1(t)+I_2(t)}{2R}\sqrt{\frac{2}{1-k}} - |e_1(t)|^2}$$

[expression 14]

$$|e_{UV}(t)| \simeq \sqrt{\frac{I_3(t)+I_4(t)}{2R}\sqrt{\frac{2}{1-k}} - |e_1(t)|^2}$$

In other words, the attenuated upstream data signal is estimated as a function of the original downstream data signal subtracted from the summation of current signals, each comprising the intensity of the first tapped signal, the intensity of the second tapped signal, and the product of the first tapped signal and the second tapped signal. As mentioned, one of the keys of this invention is how to estimate the intensity of the different signals that travel through the optical distribution network with polarization diversity, in order to obtain the polarization components which enable the determination of environmental parameters.

This estimation might entail some degree of uncertainty, as $E_1(t)$ is estimated by neglecting the effects of $E_2(t)$ using the same raw inputs (intensity components of the photedetected currents). In order to correct that, advanced estimation methods can be applied. This includes a Wiener filter or any other filter whose values are optimized by an iterative method that minimizes an error function. These iterative methods can be the steepest descent, a least mean square, or a batch least squares to provide quick convergence with a good accuracy, although others might be used.

So far, it has been demonstrated how, just by tapping into an existing operational optical fiber, the monitoring apparatus of the invention estimates:

- $E_1(t)$: The signal injected by the OLT;

- $E_R(t)$: The backscattering of the signal injected by the OLT, $E_1(t)$;

- $E_U(t)$: The attenuated signal transmitted by the ONUs.

Since these signals comprise their characteristic parameters, such as intensity, frequency or polarization state, the digital processor uses known estimation algorithms to determine a change in at least one parameter of the data communication signal and to determine therefrom a change in at least one parameter of the optical fiber, or the medium in contact with the optical fiber, as a function of the at least one parameter change of the data communication signal.

TABLE 1 summarizes the most relevant signals of the monitoring apparatus.

TABLE 1 - Description of the signals present in the apparatus

| Signal | Description |
|---|---|
| $E_1(t)$ | Original downstream data signal output by the OLT. |
| $E_2(t)$ | Signal at the downstream input of the tap of the apparatus. |
| $E_{C1}(t)$ | First signal at the output of the first optical coupler. |
| $E_{C2}(t)$ | Second signal at the output of the first optical coupler. |
| $E_3(t)$ | First signal at the output of the second optical coupler. |
| $E_4(t)$ | Second signal at the output of the second optical coupler. |
| 230 | H output of the PBS for $E_3(t)$. |
| 232 | V output of the PBS for $E_3(t)$. |
| 234 | H output of the PBS for $E_4(t)$. |
| 236 | V output of the PBS for $E_4(t)$. |
| 240,244 | Analog signals with the H components. |

(continued)

| Signal | Description |
| --- | --- |
| 242,246 | Analog signals with the V components. |

The embodiment of FIG. 2 refers to an optoelectronic front-end capable of tapping into an existing fiber, and configured to non-intrusively (that is, without adding new fiber lines, or sensing signals, or modifying the signals travelling through the fiber) estimate the various signal components present within the optical field of the fiber, allowing a change in the signal parameters and the fiber parameters to be determined, resulting in the monitoring of environmental parameters to be completed. The monitoring apparatus is universal, in the sense that, no matter what type of backscattering the optical field is subjected to, it enables the extraction of a particular signal parameter, from several, necessary for estimating a particular fiber parameter, from several, thereby enabling the sensing, or monitoring, of any environmental parameter.

Furthermore, the design of this embodiment is simple and covers all the aspects that are necessary for generating the relevant signals that are present in the fiber ($E_1(t)$, $E_U(t)$, $E_R(t)$). This is a good option when approaching a design to be implemented using free-space optics devices. This is quite interesting, as it can be easily integrated and features low losses.

It is worth noting that prior art solutions, in order to obtain polarization components, use an additional laser source combined with the tapped signals. However the auto-coherent detection of this embodiment does not need additional laser sources due to its internal configuration which generates the different signals present in the fiber ($E_1(t)$, $E_U(t)$, $E_R(t)$).

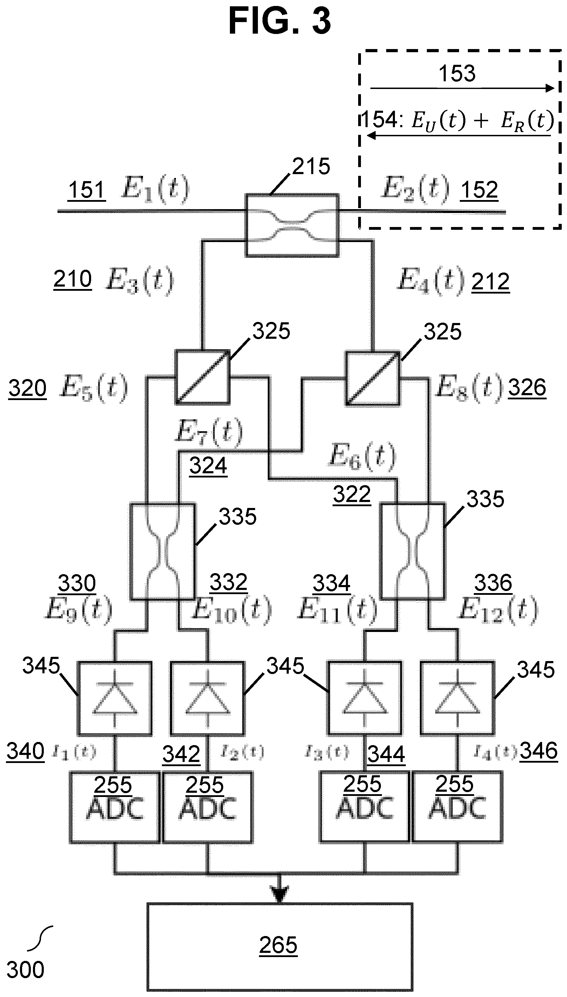

However, the inventors have identified that this first embodiment has the several inefficiencies which they have addressed in the second embodiment of FIG. 3. The beam splitters should be placed as close as possible to the entry points of the circuit to reduce polarization dependent losses. Another one is the difficulty in achieving very similar responsivities for photodetectors unless they are in a balanced configuration with independent outputs. This means that the design should be tuned to accommodate the second coupling stage at the input of the photodetectors.

Therefore, in a second embodiment of the invention, a monitoring apparatus is provided wherein this problem has been solved. In particular, by positioning the polarization beam splitters immediately following the signal tap and before to any subsequent stages, a photonic integrated circuit can be implemented that lessens the impact of polarization-dependent losses. Losses are thereby minimized and selectivity of the polarization components improved. Additionally, this design configures a second splitting stage right before photodetection, which enables the usage of balanced detectors for a fiber-based implementation that result in improved noise suppression and quick prototyping. Both features combine resulting in increased accuracy of the estimated signals after all the processing ($E_1(t)$, $E_U(t)$, $E_R(t)$).

**FIG. 3** depicts the components 300 of the monitoring apparatus 150 of the invention according to a second embodiment. This second embodiment operates using the same general principles of the first embodiment, hence it is apparent for the skilled artisan those aspects of the first embodiment which are present also in this embodiment. Especially as the same reference numerals in the drawing refer to the same components. In any case, whenever this second embodiment departs from the first embodiment, the feature is explicitly indicated, together with the corresponding advantageous technical effects.

Similar to the first embodiment, the first signal 151, the original optical data signal, at the upstream tap is denoted as $E_1(t)$. The second signal 152 at the downstream tap is denoted as $E_2(t)$, which comprises a downstream data signal 153 and an upstream signal 154. The upstream signal 154 comprises an attenuated upstream data signal $E_U(t)$ and a backscattered signal $E_R(t)$. The backscattered signal $E_R(t)$ has been subjected to at least one of Rayleigh scattering, Raman scattering or Brillouin scattering, or a combination thereof. Downstream data communication signal 153 is not processed.

In a first stage, the monitoring apparatus is configured to extract a first signal 151 at its upstream tap and a second signal 152 at its downstream tap. In an intermediate stage, the monitoring apparatus is configured to further process the extracted first and second optical signals to generate optical signals which comprise the product between the same polarization components of the first optical signal and the second optical signal. In a final stage, the monitoring apparatus is configured to, using these optical signals, reconstruct a digital downstream signal, a digital upstream data signal and a digital upstream backscattered signal, and determine fiber related environmental parameters based on the reconstructed digital signals. To this end it first determines a change in at least one parameter of the data communication signal and, therefrom, determines a change in at least one parameter of the optical fiber, or the medium in contact with the optical fiber, as a function of the at least one parameter change of the data communication signal. Environmental sensing or monitoring is then performed using the optical fiber parameter change. To this end, the final stage of the monitoring apparatus comprises at least one memory configured for storing programmable instructions and input/output data, and at least one digital processor configured for executing the programmable instructions

The at least one parameter of the data communication signal determined by the monitoring apparatus is one or more of its intensity, frequency, or polarization state. The at least one parameter of the optical fiber determined by the monitoring apparatus is the level of stress or pressure of the optical fiber and/or at least one parameter of the medium in contact with the optical fiber such as the temperature of the medium. So, in one example implementation, the monitoring apparatus determines first the change in polarization state of the signal in order to determine consequently a degree of change in pressure the fiber has been subjected to. In another example implementation, the monitoring apparatus determines first the change in intensity of the signal in order to determine consequently a degree of change in temperature of the environment surrounding the fiber. In yet another example implementation, the monitoring apparatus determines first the change in frequency of the signal in order to determine consequently a degree of change in temperature of the fiber itself.

In more detail, returning to the first stage of the monitoring apparatus, an optical coupler 215 taps into the output of the OLT 110, extracting a portion of the transmitted signal 151 and allowing it to bypass through to the rest of the network. The transfer matrix of the signal coupler is:

$$T_c = \begin{bmatrix} \sqrt{1-k} & j\sqrt{k} \\ j\sqrt{k} & \sqrt{1-k} \end{bmatrix} \qquad \text{[expression 15]}$$

where j is the imaginary unit (the square root of -1) and k is the split ratio between 0 and 1 which determines the proportion of the signals which are extracted and the proportion which is further transmitted on downstream.

For the sake of convenience, each optical field is expressed as its horizontal, H, and vertical, V, polarization components following the Jones formalism:

$$E_p(t) = \begin{bmatrix} e_{pH}(t) \\ e_{pV}(t) \end{bmatrix} \qquad \text{[expression 16]}$$

where $e_{pH}(t)$ is the horizontal component and $e_{pV}(t)$ is the vertical component of $E_p(t)$ for p ranging from 1 to 12.

Following from the transfer matrix, the signals output from the fiber optic coupler are $E_3(t)$ 210 and $E_4(t)$ 212:

$$E_3(t) = \sqrt{1-k}E_2(t)$$
$$E_4(t) = \sqrt{1-k}E_1(t) \qquad \text{[expression 17]}.$$

In a second stage of the monitoring apparatus, each one of the tapped signals $E_3(t)$ and $E_4(t)$ is fed to a respective optical polarization beam splitter, PBS, 325 which decomposes the polarization components of these signals, resulting in two output signals for each input signal, the output signals containing either the H or the V component associated with the optical fields. In the case of tapped signal $E_3(t)$ 210, this results in a split signal $E_5(t)$ 320 containing the H component and a split signal $E_6(t)$ 322 containing the V component. In the case of tapped signal $E_4(t)$ 212, this results in a split signal $E_7(t)$ 324 containing the H component and a split signal $E_8(t)$ 326 containing the V component. So, simplifying the Jones notation to only depict the relevant surviving component at each output,

$$E_5(t) = e_{3H}(t) = \sqrt{1-k}e_{2H}(t)$$
$$E_6(t) = e_{3V}(t) = \sqrt{1-k}e_{2V}(t)$$
$$E_7(t) = e_{4H}(t) = \sqrt{1-k}e_{1H}(t) \qquad \text{[expression 18]}.$$
$$E_8(t) = e_{4V}(t) = \sqrt{1-k}e_{1V}(t)$$

In a third stage of the monitoring apparatus, the H components of these split signals are fed into a first optical coupler 335 and the V components are fed into a second optical coupler 335, both configured with a ratio of 50:50 (that is, $k = 0.5$) in order to provide a balanced combination after photodetection. In other words, horizontal split signal $E_5(t)$ 320 and horizontal split signal $E_7(t)$ 324 are fed into a first optical coupler resulting in first and second horizontal coupled optical signals $E_9(t)$ 330 and $E_{10}(t)$ 332, while vertical split signal $E_6(t)$ 322 and vertical split signal $E_8(t)$ 326 are fed into a second optical coupler resulting in first and second vertical coupled optical signals $E_{11}(t)$ 334 and $E_{12}(t)$ 336. Therefore, the optical fields at the output of the two optical couplers are:

$$E_9(t) = \frac{1}{\sqrt{2}} E_5(t) + j\frac{1}{\sqrt{2}} E_7(t)$$
$$E_{10}(t) = j\frac{1}{\sqrt{2}} E_5(t) + \frac{1}{\sqrt{2}} E_7(t)$$
$$E_{11}(t) = \frac{1}{\sqrt{2}} E_6(t) + j\frac{1}{\sqrt{2}} E_8(t)$$
$$E_{12}(t) = j\frac{1}{\sqrt{2}} E_6(t) + \frac{1}{\sqrt{2}} E_8(t)$$

[expression 19]

and can be expressed in terms of their Jones vector components of $E_1(t)$ and $E_2(t)$ as:

$$E_9(t) = \sqrt{\frac{1-k}{2}} \left[ e_{2H}(t) + je_{1H}(t) \right]$$

$$E_{10}(t) = \sqrt{\frac{1-k}{2}} \left[ je_{2H}(t) + e_{1H}(t) \right]$$

$$E_{11}(t) = \sqrt{\frac{1-k}{2}} \left[ e_{2V}(t) + je_{1V}(t) \right]$$

$$E_{12}(t) = \sqrt{\frac{1-k}{2}} \left[ je_{2V}(t) + e_{1V}(t) \right]$$

[expression 20].

The four signals allow for retrieval of all mixing products for each polarization component (H and V). If only two signals were available, part of the information would be missing: in other words, either the information regarding one of the components of the state of polarization (H or V) is retrieved; or there is an incomplete set of signal products after photodetection.

In a fourth stage of the monitoring apparatus, each one of the four coupled optical signals is fed into respective optical photodetectors 345 configured to generate an analog electrical signal whose current is directly proportional to the intensity of the optical field of the optical signal. For simplicity, it is assumed that all photodetectors have the same responsivity R as they are balanced pairs. The resulting currents of the electrical signals after this detection process are:

$$I_1(t) = R|E_9(t)|^2$$
$$I_2(t) = R|E_{10}(t)|^2$$
$$I_3(t) = R|E_{11}(t)|^2$$
$$I_4(t) = R|E_{12}(t)|^2$$

[expression 21]

and can be expressed in terms of their Jones vector components of $E_1(t)$ and $E_2(t)$ as

$$I_1(t) = R\sqrt{\frac{1-k}{2}} \left[ |e_{2H}(t)|^2 + |e_{1H}(t)|^2 + 2|e_{2H}(t)||e_{1H}(t)|\sin\Delta\phi_H \right]$$

$$I_2(t) = R\sqrt{\frac{1-k}{2}} \left[ |e_{2H}(t)|^2 + |e_{1H}(t)|^2 - 2|e_{2H}(t)||e_{1H}(t)|\sin\Delta\phi_H \right]$$

$$I_3(t) = R\sqrt{\frac{1-k}{2}} \left[ |e_{2V}(t)|^2 + |e_{1V}(t)|^2 + 2|e_{2V}(t)||e_{1V}(t)|\sin\Delta\phi_V \right]$$

$$I_4(t) = R\sqrt{\frac{1-k}{2}} \left[ |e_{2V}(t)|^2 + |e_{1V}(t)|^2 - 2|e_{2V}(t)||e_{1V}(t)|\sin\Delta\phi_V \right]$$

[expression 22].

Therefore, the output of the photodetection fourth stage results in a first analog electrical signal 340 with current $I_1$(t) and a second analog electrical signal 342 with current $I_2$(t) corresponding to the H components of $E_1$(t) and $E_2$(t), respectively, and a third analog electrical signal 344 with current $I_3$(t) and a fourth analog electrical signal 346 with current $I_4$(t) corresponding to the V components of $E_1$(t) and $E_2$(t), respectively.

In other words, the monitoring apparatus generates four analog current signals from the different mixing products of the signal $E_1$(t) injected to the network and, received from the network, the upstream transmitted data signal $E_U$(t) and the upstream backscattered signal $E_R$(t). The last term of each current equation refers to the product between the same polarization components of $E_1$(t) and $E_2$(t), wherein $E_2$(t) comprises the upstream data communication signal $E_U$(t) and the backscattered signal of $E_1$(t), $E_R$(t). The significance of this processing lies in the content of the output signals. In particular, each analog current signal is a function of at least three different terms:

1. The first term represents the intensity of the first signal $E_1$(t), that is, the downstream data communication signal;

2. The second term represents the intensity of the second signal $E_2$(t), that is, the upstream data communication signal $E_U$(t) and the backscattered signal $E_R$(t); and

3. The third term represents the coherent detection, that is, the combination or product, of $E_1$(t) and $E_2$(t).

Similar to the first embodiment, the optoelectronic frontend performs coherent detection via the product of the two signals being analysed. Hence, no additional circuitry for coherent detection is necessary, as it is auto-coherent. Furthermore, since the H and V components are differentiated, a polarization diverse coherent detection is performed.

As mentioned, this information (in particular, the components $E_1$(t), $E_U$(t) and $E_R$(t)) is necessary to determine the various parameters that are being monitored. However, the information is *hidden* in the four output analog signals. In order for these three components to be able to be used in known parameter determination algorithms, the original signals 151 and 152 are reconstructed digitally, which makes the information available for processing by the digital processor.

Therefore, in a fifth stage of the monitoring apparatus, the analog signals resulting from each photodetector of the previous stage are each fed into respective analog to digital converters 255 to generate four digital output signals. In a final sixth stage of the monitoring apparatus, a digital processor 265 uses the four digital output signals to reconstruct first signal 151 and second signal 152.

As can be seen, expression 22 is the same as expression 7. Therefore, the reconstruction, or estimation, of the signals 151 and 152 is performed in the same manner following expressions 8 to 14 of the first embodiment (see sections *Estimation of the original downstream data signal E1(t), Estimation of the upstream backscattered signal ER(t),* and *Estimation of the upstream attenuated data communication signal EU(t)).*

One of the keys of this invention is how to estimate the intensity of the different signals that travel through the optical distribution network with a polarization diversity in order to obtain the polarization components which enable the determination of environmental parameters. The signals estimated are:

- $E_1$(t)*:* The signal injected by the OLT

- $E_R$(t): The backscattering of the signal injected by the OLT, $E_1$(t)

- $E_U$(t): The attenuated signal transmitted by the ONUs

Since these signals comprise their characteristic parameters, such as intensity, frequency and polarization state, the digital processor uses known estimation algorithms to determine a change in at least one parameter of the data communication signal and to determine therefrom a change in at least one parameter of the optical fiber, or the medium in contact with the optical fiber, as a function of the at least one parameter change of the data communication signal.

TABLE 2 summarizes the different signals of the monitoring apparatus.

TABLE 2 - Description of the signals present in the apparatus

| Signal | Description |
|---|---|
| $E_1$(t) | Original downstream data signal output by the OLT. |
| $E_2$(t) | Signal at the downstream input of the tap of the apparatus. |
| $E_3$(t) | First extracted portion of the signal at the downstream tap. |
| $E_4$(t) | Second extracted portion of the signal at the downstream tap. |
| $E_5$(t) | H output of the PBS for $E_3$(t). |

(continued)

| Signal | Description |
|---|---|
| $E_6(t)$ | V output of the PBS for $E_3(t)$. |
| $E_7(t)$ | H output of the PBS for $E_4(t)$. |
| $E_8(t)$ | V output of the PBS for $E_4(t)$. |
| $E_9(t)$, $E_{10}(t)$ | Optical inputs to the photodetectors for H components. |
| $E_{11}(t)$, $E_{12}(t)$ | Optical inputs to the photodetectors for V components. |

Hence, the unique processing of the optical fiber signal by the monitoring apparatus generates all the relevant data necessary for monitoring parameter changes, both in the signal and therefore, in the fiber or its environment. The generation of $E_1(t)$, $E_R(t)$, and $E_U(t)$ enables this universal monitoring, independent from backscattered effects, the signal parameter and the fiber parameter being monitored, and therefore the environmental parameter being sensed. The structure of the monitoring apparatus is simple and it allows processing the optical signal speedily, allowing for real-time monitoring of parameters.

As described, the advantage of the second embodiment over the first is that the polarization beam splitters are placed just after the signal tap and before any other stage, allowing an implementation in a photonic integrated circuit that reduces the effect of polarization dependent losses. Also, this scheme accommodates the second splitting stage just before photodetection, allowing the use of balanced detectors for an implementation using fiber-based devices that could be considered for a rapid prototyping with enhanced noise suppression. Both features entail an increase of accuracy on the signals retrieved after all the processing ($E_1(t)$, $E_U(t)$, $E_R(t)$). The second embodiment also has the disadvantage that it comprises more components. However, its advantages outweigh this disadvantage.

Hence, different aspects of the invention present a novel non-intrusive and universal monitoring apparatus that enables sensing or monitoring of any environmental parameter, no matter what type of backscattering the optical field is subjected to, all signal parameters necessary for estimating all fiber parameters are made available. The invention thus provides a solution that overcomes the complexity, and cost limitations of previous approaches, enabling efficient and non-disruptive environmental monitoring in fiber optic access networks. The monitoring apparatus is completely non-intrusive in the sense that it does not require any modification of the existing optical fiber network, or optical fibers, it is monitoring, as it is simply appended to an existing system and taps into it. The structure of the monitoring apparatus is simple and it allows processing the optical signal speedily, allowing for real-time monitoring of parameters.

Furthermore, it is to be understood that the embodiments, realizations, and aspects described herein may be implemented by various means in hardware, software, firmware, middleware, microcode, or any combination thereof. Various aspects or features described herein may be implemented, on one hand, as a method or process or function, and on the other hand as an apparatus, a device, a system, or computer program accessible from any computer-readable device, carrier, or media. The methods or algorithms described may be embodied directly in hardware, in a software module executed by a processor, or a combination of the two.

The various means may comprise software modules residing in RAM memory, flash memory, ROM memory, EPROM memory, EEPROM memory, registers, hard disk, a removable disk, a CD-ROM, or any other form of storage medium known in the art.

The various means may comprise logical blocks, modules, and circuits may be implemented or performed with a general purpose processor, a digital signal processor (DSP), and application specific integrated circuit (ASIC), a field programmable gate array (FPGA), or other programmable logic device, discrete gate or transistor logic, discrete hardware components, or any combination thereof designed to perform the functions described. A general-purpose processor may be a microprocessor, but in the alternative, the processor may be any conventional processor, controller, microcontroller, or state machine.

The various means may comprise computer-readable media including, but not limited to, magnetic storage devices (for example, hard disk, floppy disk, magnetic strips, etc.), optical disks (for example, compact disk (CD), digital versatile disk (DVD), etc.), smart cards, and flash memory devices (for example, EPROM, card, stick, key drive, etc.). Additionally, various storage media described herein can represent one or more devices and/or other machine-readable media for storing information. The term machine-readable medium can include, without being limited to, various media capable of storing, containing, and/or carrying instruction(s) and/or data. Additionally, a computer program product may include a computer readable medium having one or more instructions or codes operable to cause a computer to perform the functions described herein.

What has been described above includes examples of one or more embodiments. It is, of course, not possible to describe every conceivable combination, or permutation, of components and/or methodologies for purposes of describing the aforementioned embodiments. However, one of ordinary skill in the art will recognize that many further combinations and permutations of various embodiments are possible within the general inventive concept derivable from a direct and objective reading of the present disclosure. Accordingly, it is intended to embrace all such alterations, modifications and variations that fall within scope of the appended claims.

In the following, further examples of the invention are provided:

An apparatus for monitoring an optical fiber network, the network comprising at least one optical line terminal, OLT, and at least one optical network unit, ONU, wherein optical data communication signals are exchanged in both directions on at least one optical fiber line between the at least one OLT and the at least one ONU, wherein the optical field of the at least one fiber line comprises a downstream optical signal and an upstream optical signal, the upstream optical signal comprising an upstream optical data signal and an upstream optical backscattered signal, the upstream optical backscattered signal corresponding to the backscattering in the fiber line of the downstream optical signal, the apparatus comprising: a first stage comprising an optical coupler configured for extracting a portion of the downstream optical signal and a portion of the upstream optical signal; an intermediate stage comprising at least one second optical coupler and at least one splitter for coupling and splitting the downstream and upstream optical signal portions for generating optical signals comprising horizontal and vertical components of the downstream and upstream optical signal portions, which optical signals each comprise the product between the same polarization components of the downstream optical signal and the upstream optical signal; and a final stage configured for using the optical signals for reconstructing a digital downstream signal, a digital upstream data signal and a digital upstream backscattered signal, and configured for determining fiber related environmental parameters based on the reconstructed digital signals.

The apparatus, wherein the upstream optical backscattered signal has been subject to at least one of Rayleigh scattering, Raman scattering or Brillouin scattering, or a combination thereof. The apparatus, wherein the intermediate stage comprises one second optical coupler configured for coupling the downstream and upstream optical signal portions and comprises, for each one of the resulting coupled signals, one splitter configured for splitting the coupled signal into its horizontal and vertical components thereby generating the optical signals comprising the horizontal and vertical components of the downstream and upstream optical signal portions. The apparatus, wherein the intermediate stage comprises a first processing line for the downstream optical signal portion and a second processing line for the upstream optical signal portion, each processing line comprising one splitter configured for splitting its respective optical signal portion into its horizontal and vertical components to be used by both processing lines, and comprising one second optical coupler in the first processing line configured for coupling the horizontal components of the first and second processing lines, and one second optical coupler in the second processing line configured for coupling the vertical components of the first and second processing lines, thereby generating the optical signals comprising the horizontal and vertical components of the downstream and upstream optical signal portions. The apparatus, wherein the final stage comprises multiple processing lines, each final stage processing line comprises one photodetector configured for converting its respective optical signal into an analog signal, and comprises one analog-to-digital converter for converting its respective analog signal to a digital signal, wherein the final stage further comprises a processor configured for generating the reconstructed digital signals from the digital signals resulting from the multiple processing lines enabling determining the environmental parameters based on the reconstructed digital signals. The apparatus, wherein the processor is configured for determining at least one environmental parameter by first determining a change in at least one signal parameter of the reconstructed digital signals and then determining a change in at least one fiber parameter as a function of the change in the at least one signal parameter, followed by determining the at least one environmental parameter as a function of the change in the at least one fiber parameter. The apparatus, wherein the at least one signal parameter is its intensity, frequency, or polarization state, wherein the at least one fiber parameter is its level of stress, pressure, or temperature, and wherein the at least one environmental parameter is the stress, pressure, or temperature of the medium in contact with the optical fiber. The apparatus, wherein the first stage of the apparatus is connected to an output tap of an optical line terminal of the network, and wherein the optical fiber network is a fiber-to-the-home FTTH network, or any other optical fiber network.

A method for monitoring an optical fiber network, the network comprising at least one optical line terminal, OLT, and at least one optical network unit, ONU, wherein optical data communication signals are exchanged in both directions on at least one optical fiber line between the at least one OLT and the at least one ONU, wherein the optical field of the at least one fiber line comprises a downstream optical signal and an upstream optical signal, the upstream optical signal comprising an upstream optical data signal and an upstream optical backscattered signal, the upstream optical backscattered signal corresponding to the backscattering in the fiber line of the downstream optical signal, the method comprising: a first stage comprising extracting a portion of the downstream optical signal and a portion of the upstream optical signal; an intermediate stage comprising coupling and splitting the downstream and upstream optical signal portions thereby generating optical signals comprising horizontal and vertical components of the downstream and upstream optical signal portions, which optical signals each comprise the product between the same polarization components of the downstream optical signal and the upstream optical signal; and a final stage comprising using the optical signals for reconstructing a digital downstream signal, a digital upstream data signal and a digital upstream backscattered signal, and comprising determining fiber related environmental parameters based on the reconstructed digital signals.

The method, wherein the intermediate stage comprises coupling the downstream and upstream optical signal portions and, for each one of the resulting coupled signals, splitting the coupled signal into its horizontal and vertical components thereby generating the optical signals comprising the horizontal and vertical components of the downstream and upstream optical signal portions. The method, wherein the intermediate stage comprises a first processing line for the downstream optical signal portion and a second processing line for the upstream optical signal portion, each processing line comprising splitting its respective optical signal portion into its horizontal and vertical components to be used by both processing lines, and comprising in the first processing line coupling the horizontal components of the first and second processing lines, and in the second processing line coupling the vertical components of the first and second processing lines, thereby generating the optical signals comprising the horizontal and vertical components of the downstream and upstream optical signal portions. The method, wherein the final stage comprises multiple processing lines, each final stage processing line comprises converting its respective optical signal into an analog signal, and comprises converting its respective analog signal to a digital signal, wherein the final stage further comprises generating the reconstructed digital signals from the digital signals resulting from the multiple processing lines enabling determining the environmental parameters based on the reconstructed digital signals. The method, comprising determining at least one environmental parameter by first determining a change in at least one signal parameter of the reconstructed digital signals and then determining a change in at least one fiber parameter as a function of the change in the at least one signal parameter, followed by determining the at least one environmental parameter as a function of the change in the at least one fiber parameter.

A distributed optical fiber monitoring system comprising an optical fiber network comprising at least one optical line terminal, **OLT,** and at least one optical network unit, ONU, wherein optical data communication signals are exchanged in both directions on at least one optical fiber line between the at least one OLT and the at least one ONU, wherein the optical field of the at least one fiber line comprises a downstream optical signal and an upstream optical signal, the upstream optical signal comprising an upstream optical data signal and an upstream optical backscattered signal, the upstream optical backscattered signal corresponding to the backscattering in the optical fiber line of the downstream optical signal, the system further comprising at least one monitoring apparatus connected to an output tap of an OLT.

A computer program comprising instructions, once executed on a processor, for performing the method steps.

A computer-readable storage medium comprising instructions, once executed on a processor, for performing the method steps.

**Claims**

1. An apparatus for monitoring an optical fiber network, the network comprising at least one optical line terminal, OLT, and at least one optical network unit, ONU, wherein optical data communication signals are exchanged in both directions on at least one optical fiber line between the at least one OLT and the at least one ONU, wherein the optical field of the at least one fiber line comprises a downstream optical signal and an upstream optical signal, the upstream optical signal comprising an upstream optical data signal and an upstream optical backscattered signal, the upstream optical backscattered signal corresponding to the backscattering in the fiber line of the downstream optical signal, the apparatus comprising:

   a first stage comprising an optical coupler configured for extracting a portion of the downstream optical signal and a portion of the upstream optical signal;
   an intermediate stage comprising at least one second optical coupler and at least one splitter for coupling and splitting the downstream and upstream optical signal portions for generating optical signals comprising horizontal and vertical components of the downstream and upstream optical signal portions, which optical signals each comprise the product between the same polarization components of the downstream optical signal and the upstream optical signal; and
   a final stage configured for using the optical signals for reconstructing a digital downstream signal, a digital upstream data signal and a digital upstream backscattered signal, and configured for determining fiber related environmental parameters based on the reconstructed digital signals.

2. The apparatus of claim 1, wherein the upstream optical backscattered signal has been subject to at least one of Rayleigh scattering, Raman scattering or Brillouin scattering, or a combination thereof.

3. The apparatus of claim 2, wherein the intermediate stage comprises one second optical coupler configured for coupling the downstream and upstream optical signal portions and comprises, for each one of the resulting coupled signals, one splitter configured for splitting the coupled signal into its horizontal and vertical components thereby generating the optical signals comprising the horizontal and vertical components of the downstream and upstream optical signal portions.

4. The apparatus of claim 2, wherein the intermediate stage comprises a first processing line for the downstream optical signal portion and a second processing line for the upstream optical signal portion, each processing line comprising one splitter configured for splitting its respective optical signal portion into its horizontal and vertical components to be used by both processing lines, and comprising one second optical coupler in the first processing line configured for coupling the horizontal components of the first and second processing lines, and one second optical coupler in the second processing line configured for coupling the vertical components of the first and second processing lines, thereby generating the optical signals comprising the horizontal and vertical components of the downstream and upstream optical signal portions.

5. The apparatus of claim 2, wherein the final stage comprises multiple processing lines, each final stage processing line comprises one photodetector configured for converting its respective optical signal into an analog signal, and comprises one analog-to-digital converter for converting its respective analog signal to a digital signal, wherein the final stage further comprises a processor configured for generating the reconstructed digital signals from the digital signals resulting from the multiple processing lines enabling determining the environmental parameters based on the reconstructed digital signals.

6. The apparatus of claim 2, wherein the processor is configured for determining at least one environmental parameter by first determining a change in at least one signal parameter of the reconstructed digital signals and then determining a change in at least one fiber parameter as a function of the change in the at least one signal parameter, followed by determining the at least one environmental parameter as a function of the change in the at least one fiber parameter.

7. The apparatus of claim 6, wherein the at least one signal parameter is its intensity, frequency, or polarization state, wherein the at least one fiber parameter is its level of stress, pressure, or temperature, and wherein the at least one environmental parameter is the stress, pressure, or temperature of the medium in contact with the optical fiber.

8. The apparatus of claim 2, wherein the first stage of the apparatus is connected to an output tap of an optical line terminal of the network, and wherein the optical fiber network is a fiber-to-the-home FTTH network, or any other optical fiber network.

9. A method for monitoring an optical fiber network, the network comprising at least one optical line terminal, OLT, and at least one optical network unit, ONU, wherein optical data communication signals are exchanged in both directions on at least one optical fiber line between the at least one OLT and the at least one ONU, wherein the optical field of the at least one fiber line comprises a downstream optical signal and an upstream optical signal, the upstream optical signal comprising an upstream optical data signal and an upstream optical backscattered signal, the upstream optical backscattered signal corresponding to the backscattering in the fiber line of the downstream optical signal, the method comprising:

   a first stage comprising extracting a portion of the downstream optical signal and a portion of the upstream optical signal;
   an intermediate stage comprising coupling and splitting the downstream and upstream optical signal portions thereby generating optical signals comprising horizontal and vertical components of the downstream and upstream optical signal portions, which optical signals each comprise the product between the same polarization components of the downstream optical signal and the upstream optical signal; and
   a final stage comprising using the optical signals for reconstructing a digital downstream signal, a digital upstream data signal and a digital upstream backscattered signal, and comprising determining fiber related environmental parameters based on the reconstructed digital signals.

10. The method of claim 9, wherein the intermediate stage comprises coupling the downstream and upstream optical signal portions and, for each one of the resulting coupled signals, splitting the coupled signal into its horizontal and vertical components thereby generating the optical signals comprising the horizontal and vertical components of the downstream and upstream optical signal portions.

11. The method of claim 9, wherein the intermediate stage comprises a first processing line for the downstream optical signal portion and a second processing line for the upstream optical signal portion, each processing line comprising splitting its respective optical signal portion into its horizontal and vertical components to be used by both processing lines, and comprising in the first processing line coupling the horizontal components of the first and second processing lines, and in the second processing line coupling the vertical components of the first and second processing lines, thereby generating the optical signals comprising the horizontal and vertical components of the downstream and upstream optical signal portions.

12. The method of claim 9, wherein the final stage comprises multiple processing lines, each final stage processing line comprises converting its respective optical signal into an analog signal, and comprises converting its respective analog signal to a digital signal, wherein the final stage further comprises generating the reconstructed digital signals from the digital signals resulting from the multiple processing lines enabling determining the environmental parameters based on the reconstructed digital signals.

13. The method of claim 9, comprising determining at least one environmental parameter by first determining a change in at least one signal parameter of the reconstructed digital signals and then determining a change in at least one fiber parameter as a function of the change in the at least one signal parameter, followed by determining the at least one environmental parameter as a function of the change in the at least one fiber parameter.

14. A distributed optical fiber monitoring system comprising an optical fiber network comprising at least one optical line terminal, OLT, and at least one optical network unit, ONU, wherein optical data communication signals are exchanged in both directions on at least one optical fiber line between the at least one OLT and the at least one ONU, wherein the optical field of the at least one fiber line comprises a downstream optical signal and an upstream optical signal, the upstream optical signal comprising an upstream optical data signal and an upstream optical backscattered signal, the upstream optical backscattered signal corresponding to the backscattering in the optical fiber line of the downstream optical signal, the system further comprising at least one monitoring apparatus according to claim 1 connected to an output tap of an OLT.

15. A computer program comprising instructions, once executed on a processor, for performing the method steps of any one of claims 9 to 13.

16. A computer-readable storage medium comprising instructions, once executed on a processor, for performing the method steps of any one of claims 9 to 13.

**Amended claims in accordance with Rule 137(2) EPC.**

1. An apparatus (150; 200; 300) for monitoring an optical fiber network, the network comprising at least one optical line terminal, OLT (110), and at least one optical network unit, ONU (120), wherein optical data communication signals are exchanged in both directions on at least one optical fiber line between the at least one OLT and the at least one ONU, wherein the optical field of the at least one fiber line comprises a first optical signal (151) and a second optical signal (152), the second optical signal comprising an upstream optical data signal ($E_V(t)$) and an upstream optical backscattered signal ($E_R(t)$), the upstream optical backscattered signal corresponding to the backscattering in the fiber line of the first optical signal (151), the apparatus comprising:

   a first stage comprising an optical coupler (215) configured for extracting a portion (210) of the first optical signal and a portion (212) of the second optical signal;
   an intermediate stage comprising at least one second optical coupler (225; 335) and at least one splitter (235; 325) for coupling and splitting the first and second optical signal portions (210, 212) for generating optical signals (230, 232, 234, 236; 330, 332, 334, 336) comprising horizontal and vertical polarization components of the first and second optical signal portions (210, 212), which generated optical signals (230, 232, 234, 236; 330, 332, 334, 336) each comprise the product between the same polarization components of the first optical signal (151) and the second optical signal (152); and
   a final stage configured for using the generated optical signals (230, 232, 234, 236; 330, 332, 334, 336) for reconstructing a digital downstream signal, a digital upstream data signal and a digital upstream backscattered signal, and configured for determining fiber related environmental parameters based on the reconstructed digital signals.

2. The apparatus of claim 1, wherein the upstream optical backscattered signal ($E_R(t)$) has been subject to at least one of Rayleigh scattering, Raman scattering or Brillouin scattering, or a combination thereof.

3. The apparatus of claim 2, wherein the intermediate stage comprises, for each one of the resulting coupled signals (220, 222) from the at least one second optical coupler (225), one splitter (235) configured for splitting the coupled signal into its horizontal and vertical polarization components thereby generating the optical signals (230, 232, 234, 236) comprising the horizontal and vertical polarization components of the first and second optical signals (151, 152).

4. The apparatus of claim 2, wherein the intermediate stage comprises a first processing line for the first optical signal portion (210) and a second processing line for the second optical signal portion (212), each processing line comprising one splitter (325) configured for splitting its respective optical signal portion (210, 212) into its horizontal and vertical polarization components to be used by both processing lines, and comprising one second optical coupler (335) in the first processing line configured for coupling the horizontal polarization components (320, 324) of the first and second processing lines, and one second optical coupler (335) in the second processing line configured for coupling the vertical polarization components (322, 326) of the first and second processing lines, thereby generating the optical signals (330, 332, 334, 336) comprising the horizontal and vertical polarization components of the first and second optical signals (151, 152).

5. The apparatus of claim 2, wherein the final stage comprises multiple processing lines, each final stage processing line comprises one photodetector (245; 345) configured for converting its respective generated optical signal (230, 232, 234, 236; 330, 332, 334, 336) into an analog signal (240, 242, 244, 246; 340, 342, 344, 346), and comprises one analog-to-digital converter (255) for converting its respective analog signal to a digital signal, wherein the final stage further comprises a processor (265) configured for generating the reconstructed digital signals from the digital signals resulting from the multiple processing lines enabling determining the environmental parameters based on the reconstructed digital signals.

6. The apparatus of claim 2, wherein the processor (265) is configured for determining at least one environmental parameter by first determining a change in at least one signal parameter of the reconstructed digital signals and then determining a change in at least one fiber parameter as a function of the change in the at least one signal parameter, followed by determining the at least one environmental parameter as a function of the change in the at least one fiber parameter.

7. The apparatus of claim 6, wherein the at least one signal parameter is its intensity, frequency, or polarization state, wherein the at least one fiber parameter is its level of stress, or temperature, and wherein the at least one environmental parameter is the stress, pressure, or temperature of the medium in contact with the optical fiber.

8. The apparatus of claim 2, wherein the first stage of the apparatus is connected to an output tap of an optical line terminal (110) of the network, and wherein the optical fiber network is a fiber-to-the-home FTTH network, or any other optical fiber network.

9. A method for monitoring an optical fiber network, the network comprising at least one optical line terminal, OLT (110), and at least one optical network unit, ONU (120), wherein optical data communication signals are exchanged in both directions on at least one optical fiber line between the at least one OLT and the at least one ONU, wherein the optical field of the at least one fiber line comprises a first optical signal (151) and a second optical signal (152), the second optical signal comprising an upstream optical data signal ($E_V(t)$) and an upstream optical backscattered signal ($E_R(t)$), the upstream optical backscattered signal corresponding to the backscattering in the fiber line of the first optical signal (151), the method comprising:

a first stage comprising extracting a portion (210) of the first optical signal and a portion of the second optical signal (212);
an intermediate stage comprising coupling and splitting the first and second optical signal portions (210, 212) thereby generating optical signals (230, 232, 234, 236; 330, 332, 334, 336) comprising horizontal and vertical polarization components of the first and second optical signal portions (210, 212), which generated optical signals (230, 232, 234, 236; 330, 332, 334, 336) each comprise the product between the same polarization components of the first optical signal (151) and the second optical signal (152); and
a final stage comprising using the generated optical signals (230, 232, 234, 236; 330, 332, 334, 336) for reconstructing a digital downstream signal, a digital upstream data signal and a digital upstream backscattered signal, and comprising determining fiber related environmental parameters based on the reconstructed digital signals.

10. The method of claim 9, wherein the intermediate stage comprises coupling the first and second optical signal portions (210, 212) and, for each one of the resulting coupled signals (220, 222), splitting the coupled signal (220, 222) into its horizontal and vertical polarization components thereby generating the optical signals (230, 232, 234, 236) comprising the horizontal and vertical polarization components of the first and second optical signals (151, 152).

11. The method of claim 9, wherein the intermediate stage comprises a first processing line for the first optical signal portion (210) and a second processing line for the second optical signal portion (212), each processing line comprising splitting its respective optical signal portion (210, 212) into its horizontal and vertical polarization components to be used by both processing lines, and comprising in the first processing line coupling the horizontal polarization components (320, 324) of the first and second processing lines, and in the second processing line coupling the vertical polarization components (322, 326) of the first and second processing lines, thereby generating the optical signals (330, 332, 334, 336) comprising the horizontal and vertical polarization components of the first and second optical signals (151, 152).

12. The method of claim 9, wherein the final stage comprises multiple processing lines, each final stage processing line comprises converting its respective optical signal (230, 232, 234, 236; 330, 332, 334, 336) into an analog signal (240, 242, 244, 246; 340, 342, 344, 346), and comprises converting its respective analog signal to a digital signal, wherein the final stage further comprises generating the reconstructed digital signals from the digital signals resulting from the multiple processing lines enabling determining the environmental parameters based on the reconstructed digital signals.

13. The method of claim 9, comprising determining at least one environmental parameter by first determining a change in at least one signal parameter of the reconstructed digital signals and then determining a change in at least one fiber parameter as a function of the change in the at least one signal parameter, followed by determining the at least one environmental parameter as a function of the change in the at least one fiber parameter.

14. A distributed optical fiber monitoring system (100) comprising an optical fiber network comprising at least one optical line terminal, OLT (110), and at least one optical network unit, ONU (120), wherein optical data communication signals are exchanged in both directions on at least one optical fiber line between the at least one OLT and the at least one ONU, wherein the optical field of the at least one fiber line comprises a first optical signal (151) and a second optical signal (152), the second optical signal (152) comprising an upstream optical data signal ($E_V(t)$) and an upstream optical backscattered signal ($E_R(t)$), the upstream optical backscattered signal corresponding to the backscattering in the optical fiber line of the first optical signal (151), the system further comprising at least one monitoring apparatus (150; 200; 300) according to claim 1 connected to an output tap of an OLT (110).

15. A computer program comprising instructions, once executed on a processor, for using the reconstructed digital downstream signal, the reconstructed digital upstream data signal and the reconstructed digital upstream backscattered signal generated by at least one monitoring apparatus (150; 200; 300) according to claim 1 for determining fiber related environmental parameters based on the reconstructed digital signals, from the optical field of at least one fiber line comprising a first optical signal (151) and a second optical signal (152), each reconstructed digital signal comprising the product between the same polarization components of the first optical signal (151) and the second optical signal (152).

16. A computer-readable storage medium comprising instructions, once executed on a processor, for using the reconstructed digital downstream signal, the reconstructed digital upstream data signal and the reconstructed digital upstream backscattered signal generated by at least one monitoring apparatus (150; 200; 300) according to claim 1 for determining fiber related environmental parameters based on the reconstructed digital signals, from the optical field of at least one fiber line comprising a first optical signal (151) and a second optical signal (152), each reconstructed digital signal comprising the product between the same polarization components of the first optical signal (151) and the second optical signal (152).

# FIG. 1

downstream →

← upstream

100

# FIG. 2

# FIG. 3

$153$

$154: E_U(t) + E_R(t)$

$151$ $E_1(t)$    $215$    $E_2(t)$ $152$

$210$ $E_3(t)$    $E_4(t)$ $212$

$325$    $325$

$320$ $E_5(t)$    $E_8(t)$ $326$

$E_7(t)$    $E_6(t)$

$324$    $322$

$335$    $335$

$330$    $332$    $334$    $336$

$E_9(t)$    $E_{10}(t)$    $E_{11}(t)$    $E_{12}(t)$

$345$    $345$    $345$    $345$

$340$ $I_1(t)$    $342$ $I_2(t)$    $I_3(t)$ $344$    $I_4(t)$ $346$

$255$ ADC    $255$ ADC    $255$ ADC    $255$ ADC

$265$

$300$

Europäisches
Patentamt

European
Patent Office

Office européen
des brevets

# EUROPEAN SEARCH REPORT

**Application Number**

EP 25 38 2665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 865 845 A (HANGZHOU RESEARCH INSTITUTE XIDIAN UNIV; UNIV XIDIAN) 10 October 2023 (2023-10-10) * paragraphs [0002], [0004], [0010], [0011], [0029] * * figure 1 * | 1-16 | INV. H04B10/079 |
| A | MARTINS H. F. ET AL: "Real time dynamic strain monitoring of optical links using the backreflection of live PSK data", OPTICS EXPRESS, vol. 24, no. 19, 16 September 2016 (2016-09-16), page 22303, XP055916603, DOI: 10.1364/OE.24.022303 * abstract * * 3rd paragraph on p. 3 * * last paragraph on p. 5 * * section "3. Experimental setup" * | 1-16 | |
| A | VEEN DOUTJE VAN ET AL: "Polarization Based Fiber Optic Sensing and Monitoring in Real-time IM-DD Based PON", 2025 OPTICAL FIBER COMMUNICATIONS CONFERENCE AND EXHIBITION (OFC), OPTICA, 30 March 2025 (2025-03-30), pages 1-3, XP034957695, DOI: 10.1364/OFC.2025.W2A.54 [retrieved on 2025-07-04] * section "3.3. Polarization sensing in multiple wavelength case" * * figure 1 * | 1-16 | **TECHNICAL FIELDS SEARCHED (IPC)**<br>H04B |
| A | US 11 668 590 B2 (ALIBABA GROUP HOLDING LTD [KY]) 6 June 2023 (2023-06-06) * column 3, line 35 - line 54 * * column 5, line 32 - column 6, line 2 * * figure 3a * | 1-16 | |

The present search report has been drawn up for all claims

| Place of search | Date of completion of the search | Examiner |
|---|---|---|
| Munich | 25 November 2025 | Ganzmann, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 38 2665

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2025

| Patent document cited in search report | Publication date | Patent family member(s) | Publication date |
|---|---|---|---|
| CN 116865845 A | 10-10-2023 | NONE | |
| US 11668590 B2 | 06-06-2023 | NONE | |

EPO FORM P0459

For more details about this annex : see Official Journal of the European Patent Office, No. 12/82